# EUROPÄISCHE PATENTSCHRIFT

(11) **EP 0 472 882 B1**
(45) Veröffentlichungstag und Bekanntmachung des Hinweises auf die Patenterteilung: **12.04.1995**
(21) Anmeldenummer: 91111900.6
(22) Anmeldetag: 17.07.1991
(51) Int. Cl.: A47B 85/06, A47B 85/08, A47B 853/04, B60P 3/36

(54) **Stauraumtür**
Store-room door
Porte de compartiment d'emmagasinage

(30) Priorität: 25.08.1990 DE 9012257 U
(43) Veröffentlichungstag der Anmeldung: 04.03.1992
(73) Patentinhaber: Schuler, Karl-Heinz, D-88213 Ravensburg (DE)
(72) Erfinder: Schuler, Karl-Heinz, D-88213 Ravensburg (DE)
(74) Vertreter: Engelhardt, Guido, Dipl.-Ing.

(56) Entgegenhaltungen:
- DE-A- 1 938 439
- FR-A- 1 101 581
- GB-A- 1 087 973

## Beschreibung

Die Erfindung bezieht sich auf eine Stauraumtür eines Reisemobils oder eines Wohnwagens, die mittels Scharnieren um eine vertikale Achse verschwenkbar gehalten ist.

Um in Reisemobilen und Wohnwagen die mitzuführenden Utensilien unterbringen zu können, sind an deren Wänden vielfach Staukästen vorgesehen, die mittels Klappen oder Türen verschließbar sind. Des weiteren sind an den Wänden oftmals auch klappbare Tische angebracht, die beispielsweise zum Essen aufgestellt werden. Der Wandbereich, der von einem solchen Klapptisch abgedeckt wird, ist jedoch nicht als Stauraum nutzbar.

Durch die DE-A-19 38 439 ist zwar eine Schrank-Tisch-Kombination bekannt, bei der die als Tisch verwendbare Tür um eine vertikale Achse schwenkbar gehalten und über einen Tragrahmen aufgehängt ist. Der Tragrahmen ist des weiteren über eine Gelenkverbindung um eine horizontale Achse klappbar und im aufgeklappten Zustand durch Abstützmittel abgestützt. Diese Schrank-Tisch-Kombination ist jedoch nicht als Stauraumtür eines Reisemobils oder eines Wohnwagens einsetzbar.

Aufgabe der Erfindung ist es daher, eine Stauraumtür zu schaffen, die ohne Schwierigkeiten auch als Tisch verwendbar ist, so daß in dem diesen zugeordneten Wandbereich ein Stauraum vorgesehen werden kann, der aber dennoch gut zugänglich ist. Der dazu erforderliche Bauaufwand soll gering gehalten werden, auch soll der Tisch leicht aufzuklappen sein und eine hohe Stabilität und Tragkraft aufweisen.

Gemäß der Erfindung wird dies dadurch erreicht, daß die Stauraumtür über einen aus einem inneren Rahmen und einem äußeren Rahmen zusammengesetzten Tragrahmen aufgehängt ist, daß der äußere die Stauraumtür tragende Rahmen über eine im oberen Endbereich des inneren Rahmens vorgesehene Gelenkverbindung um eine horizontale Achse klappbar mit dem inneren Rahmen verbunden ist, und daß der innere Rahmen in den Scharnieren gelagert und der äußere Rahmen in horizontaler Lage über eine Gasfeder an dem inneren Rahmen abgestützt ist.

Zweckmäßig ist es hierbei, den inneren Rahmen und/oder den äußeren Rahmen durch vorzugsweise U-förmig gebogene Hohlprofile zu bilden, die bei eingeklappter Stauraumtür etwa in einer Ebene angeordnet sind.

Die Gelenkverbindung zwischen dem inneren Rahmen und dem äußeren Rahmen kann in einfacher Weise aus zwei die seitlichen Schenkel der Rahmen durchgreifende Gelenkbolzen bestehen.

Angebracht ist es ferner, die zur Arretierung der ausgeklappten Stauraumtür vorgesehene Gasfeder an den Holmen und/oder an Querstreben des inneren und/oder des äußeren Rahmens gelenkig abzustützen und den inneren Rahmen bei geschlossener Stauraumtür mittels einer auf der den Scharnieren gegenüberliegenden Seite angeordneten Federraste zu verriegeln.

Vorteilhaft ist es des weiteren, die Stauraumtür begrenzt verschiebbar auf dem äußeren Rahmen anzuordnen und zumindest in den beiden Endlagen mittels einer Federraste mit diesem zu verriegeln.

Auch kann es, um den Einbau zu erleichtern, angezeigt sein, zur Halterung des inneren Rahmens einen vorzugsweise aus gebogenen Hohlprofilen gebildeten Stützrahmen vorzusehen, an dem der innere Rahmen mittels Scharnieren abgestützt und der mit dem Fahrzeug verbindbar ist.

Wird eine Stauraumtür gemäß der Neuerung mittels eines zweiteiligen Türrahmens aufgehängt, dessen innerer und äußerer Rahmen um eine horizontale Achse verschwenkbar miteinander verbunden sind, so kann die Staraumtür auch aufgeklappt und als Tisch verwendet werden, so daß zwischen der Stauraumtür und der Fahrzeugwand ein Stauraum vorgesehen werden kann, der durch Aufschwenken der Stauraumtür um eine vertikale Achse dennoch gut zugänglich ist. Der Innenraum eines Reisemobils oder eines Wohnwagens kann somit durch einen zusätzlichen großen Stauraum besser ausgenutzt werden.

Durch die flach ausgebildeten und bei geschlossener Stauraumtür in einer Ebene angeordneten Rahmen wird nur ein geringer Bauraum beansprucht, die Standfestigkeit und Belastbarkeit des Tisches entspricht im aufgeklappten Zustand aber, da die Rahmen über eine Gasfeder abgestützt sind, einem herkömmlichen Klapptisch. Und da der Tragrahmen aus nur wenigen und leicht zu fertigenden Bauteilen besteht, ist die als Tisch verwendbare Stauraumtür auch in wirtschaftlicher Weise herzustellen.

In der Zeichnung ist ein Ausführungsbeispiel der gemäß der Neuerung ausgebildeten Stauraumtür dargestellt, das nachfolgend im einzelnen erläutert ist. Hierbei zeigt, jeweils in perspektivischer Darstellung:
- Figur 1: einen Wandausschnitt eines Reisemobils mit einer unter einer Ablage angeordneten, auch als Tisch verwendbaren Stauraumtür eines Stauraumes,
- Figur 2: die Stauraumtür nach Figur 1 in aufgeklappter Lage
und
- Figur 3: die Stauraumtür nach Figur 2 von unten.

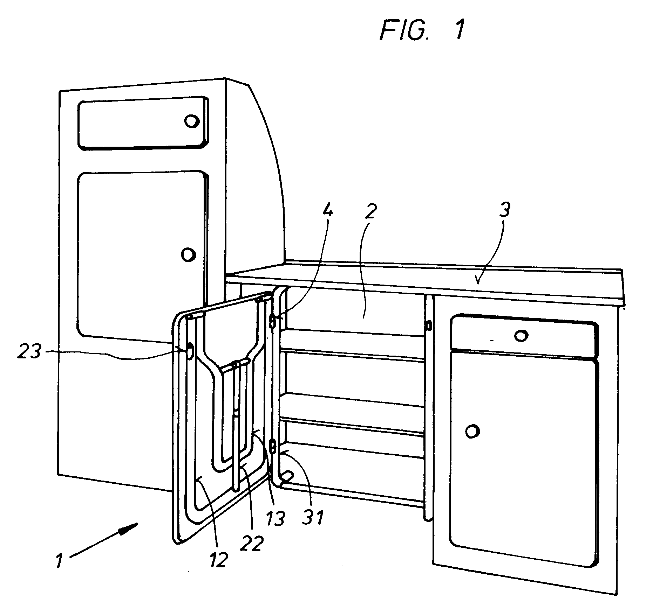

Die in den Figuren 1 bis 3 dargestellte und mit 1 bezeichnete Stauraumtür dient zum Verschließen eines an einer Wand eines Reisemobils oder eines Wohnwagens vorgesehenen Stauraumes 2. Mittels Scharnieren 4 ist die Stauraumtür 1 um eine vertikale Achse A verschwenkbar aufgehängt.

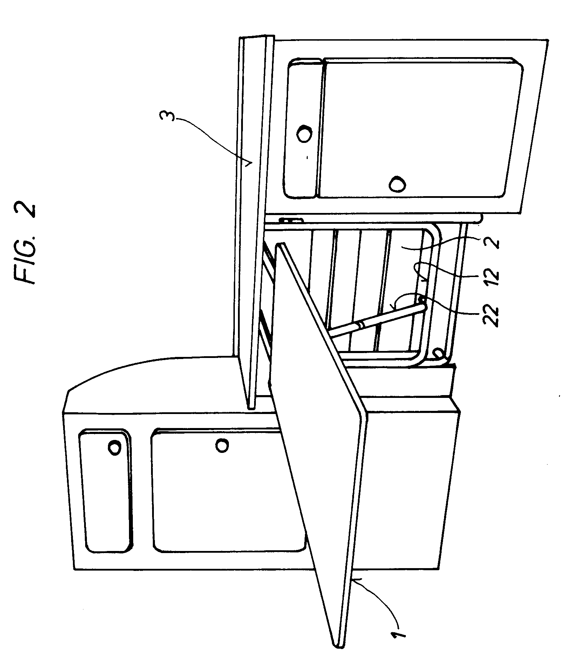

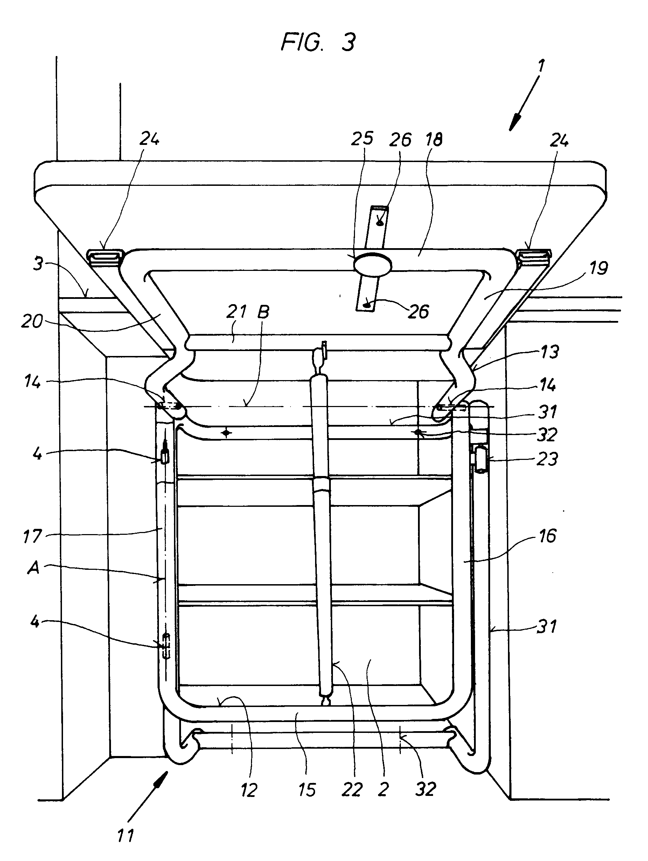

Um die Stauraumtür 1 auch als Tisch nutzen zu können, wie dies in den Figuren 2 und 3 gezeigt ist, ist dieser mit einem zweiteiligen, aus einem inneren Rahmen 12 und einem äußeren Rahmen 13 zusammengesetzten Tragrahmen 11 ausgestattet, dessen Rahmen 12 und 13 mit Hilfe zweier Gelenkbolzen 14 um eine horizontale Achse B gelenkig miteinander verbunden sind. Der innere Rahmen 12, der in den Scharnieren 4 aufgehängt ist, wie auch der äußere Rahmen 13, der die Stauraumtür 1 trägt, bestehen jeweils aus U-förmig gebogenen Hohlprofilen, in deren durch Holme 15 bzw. 18 verbundenen Schenkeln 16 und 17 sowie 19 und 20 die Gelenkbolzen 14 eingesetzt sind. Außerdem ist an dem Holm 15 des inneren Rahmens 12 sowie einer Querstrebe 21 des äußeren Rahmens 13 eine Gasfeder 22 angelenkt, durch die der äußere Rahmen 13 in aufgeklapptem Zustand arretiert wird. Durch eine den Scharnieren 4 gegenüberliegend angeordnete Federraste 23 ist der innere Rahmen 12 des weiteren verriegelbar.

Durch Verschwenken der Stauraumtür 1 um die vertikale Achse A ist der Stauraum 2 gut zugänglich, da die Stauraumtür 1 aufgrund der Ausgestaltung des Tragrahmens 11 aber auch hochgeklappt und der äußere Rahmen 13 in horizontaler Lage mittels der Gasfeder 22 sicher arretier bar ist, ist die Stauraumtür 1 auch nach Art eines Klapptisches nutzbar.

Da der Stauraum 2 sowie die Stauraumtür 1 unter einer Küchenablage 3 angeordnet sind, ist ferner vorgesehen, daß die Stauraumtür 1 etwa um den über diese überstehenden Teil der Küchenablage 3 vorgezogen werden kann. Dazu dienen zwei seitlich neben dem äußeren Rahmen 13 angeordnete Führungsschienen 24, über die die Stauraumtür 1 verschiebbar an dem äußeren Rahmen 13 gehalten ist. Mit Hilfe einer an diesem angebrachten Federraste 25, die in in die Stauraumtür 1 eingearbeitete Ausnehmungen 26 eingreifen, ist diese in zwei Endstellungen verriegelbar.

Zur Halterung des Tragrahmens 11 ist bei dem gezeigten Ausführungsbeispiel ein Stützrahmen 31 vorgesehen, der ebenfalls aus Hohlprofilen besteht und mittels Schrauben 32 an der Wand und dem Boden des Reisemobils befestigt ist. Mit Hilfe des Stützrahmens 32, an dem die Scharniere 4 zum Aufhängen des Tragrahmens 11 angebracht sind, wird dessen Montage erleichtert, außerdem ist gewährleistet, daß die Stauraumtür 1 auch in aufgeklappter Lage eine hohe Stabilität aufweist und hoch belastbar ist.

## Patentansprüche

1. Stauraumtür (1) eines Reisemobils oder eines Wohnwagens, die mittels Scharnieren (4) um eine vertikale Achse verschwenkbar gehalten ist,
**dadurch gekennzeichnet,**
daß die Stauraumtür (1) über einen aus einem inneren Rahmen (12) und einem äußeren Rahmen (13) zusammengesetzten Tragrahmen (11) aufgehängt ist, daß der äußere die Stauraumtür (1) tragende Rahmen (13) über eine im oberen Endbereich des inneren Rahmens (12) vorgesehene Gelenkverbindung (Gelenkbolzen 14) um eine horizontale Achse (B) klappbar mit dem inneren Rahmen (12) verbunden ist, und daß der innere Rahmen (12) in den Scharnieren (4) gelagert und der äußere Rahmen (13) in horizontaler Lage über eine Gasfeder (22) an dem inneren Rahmen (12) abgestützt ist.

2. Stauraumtür nach Anspruch 1,
**dadurch gekennzeichnet,**
daß der innere Rahmen (12) und/oder der äußere Rahmen (13) durch vorzugsweise U-förmig gebogene Hohlprofile gebildet sind, die bei eingeklappter Stauraumtür (1) etwa in einer Ebene angeordnet sind.

3. Stauraumtür nach Anspruch 1 oder 2,
**dadurch gekennzeichnet,**
daß die Gelenkverbindung zwischen dem inneren Rahmen (12) und dem äußeren Rahmen (13) durch zwei die seitlichen Schenkel (16, 17, 19, 20) der Rahmen (12, 13) durchgreifende Gelenkbolzen (14) gebildet ist.

4. Stauraumtür nach einem oder mehreren der Ansprüche 1 bis 3,
**dadurch gekennzeichnet,**
daß die zur Arretierung der ausgeklappten Stauraumtür (1) vorgesehene Gasfeder (23) an den Holmen (15) und/oder an Querstreben (21) des inneren und/oder des äußeren Rahmens (12, 13) gelenkig abgestützt ist.

5. Stauraumtür nach einem oder mehreren der Ansprüche 1 bis 4,
**dadurch gekennzeichnet,**
daß der innere Rahmen (12) bei geschlossener Stauraumtür (1) mittels einer auf der den Scharnieren (4) gegenüberliegenden Seite angeordneten Federraste (23) verriegelbar ist.

6. Stauraumtür nach einem oder mehreren der Ansprüche 1 bis 5,
**dadurch gekennzeichnet,**
daß die Stauraumtür (1) begrenzt verschiebbar auf dem äußeren Rahmen (13) angeordnet und zumindest in den beiden Endlagen mittels einer Federraste (25) mit diesem verriegelbar ist.

7. Stauraumtür nach einem oder mehreren der Ansprüche 1 bis 6,
**dadurch gekennzeichnet,**
daß zur Halterung des inneren Rahmens (12) ein vorzugsweise aus gebogenen Hohlprofilen gebildeter Stützrahmen (31) vorgesehen ist, an dem der innere Rahmen (12) mittels Scharnieren (4) abgestützt und der mit dem Fahrzeug verbindbar ist.

## Claims

1. Store-room door (1) of a camper van or mobile home which is mounted on hinges in such a way as to pivot about a vertical axis,
**characterized in that,**
the store-room door (1) is mounted on a carrier frame (11) consisting of an inner frame (12) and an outer frame (13), that the outer frame (13) which supports the store-room door (1) is connected to the inner frame (12) by means of an articulated joint (articulated pin 14) fitted in the top end area of inner frame (12) so it can be pivoted about a horizontal axis (B), and that the internal frame (12) is supported in the hinges (4) and the outer frame (13) is braced in a horizontal position against the inner frame (12) by means of a gas-filled spring (22).

2. Store-room door in accordance with Claim 1,
**characterized in that,**
the inner frame (12) and / or the outer frame (13) are constructed from hollow tubes which, in a preferred embodiment, are bent into a U-profile and which can be approximately arranged in one plane when the store-room door (1) is folded in.

3. Store-room door in accordance with Claim 1 or Claim 2,
**characterized in that,**
the articulated joint between the inner frame (12) and the outer frame (13) is formed by two articulated pins (14) which project into the two lateral legs (16, 17, 19, 20) of the frames (12, 13).

4. Store-room door in accordance with one or more of Claims 1 to 3,
**characterized in that,**
the gas-filled spring (23) used for locking the folding store-room door (1) in position is braced against the base tubes (15) and / or against the cross-bars (21) of the inner and / or outer frames (12, 13) in such a way as to allow it to pivot.

5. Store-room door in accordance with one or more of Claims 1 to 4,
**characterized in that,**
the inner frame (12) can be locked by means of a spring latch (23) located on the side opposite to the hinges (4) when the store-room door (1) is locked.

6. Store-room door in accordance with one or more of Claims 1 to 5,
**characterized in that,**
the store-room door (1) is fitted onto the outer frame (13) so it can move to a limited extent, and is locked onto the outer frame (13) at least in the two end positions by means of a spring latch (25).

7. Store-room door in accordance with one or more of Claims 1 to 6,
**characterized in that,**
a support frame (31) is provided in order to hold the inner frame (12) whereby, in a preferred embodiment, this support frame (31) is constructed from bent hollow tubes and the inner frame (12) is supported against this support frame (31), which can be connected to the vehicle, by means of hinges (4).

## Revendications

1. Porte de compartiment d'emmagasinage (1) d'un camping-car ou d'un caravan, retenue pivotant autour d'un axe vertical au moyen de charnières (4),
caractérisée en ce que
la portière de compartiment d'emmagasinage (1) soit accrochée au moyen d'un cadre-support (11) consistant d'un cadre intérieur (12) et d'un cadre extérieur (13), que le cadre extérieur (13) supportant la portière de compartiment d'emmagasinage (1) soit lié au cadre intérieur (12) par l'intermédiaire d'une articulation (boulon articulé 14) prévue vers l'extrémité supérieure du cadre intérieur (12) de façon à se laisser pivoter autour d'un axe horizontal (B) et que le cadre intérieur (12) soit logé dans les charnières (4) et le cadre extérieur (13) s'appuye, par l'intermédiaire d'un amortissement pneumatique (22), en position horizontale sur le cadre intérieur (12).

2. Porte de compartiment d'emmagasinage d'après la revendication 1,
caractérisée en ce que
le cadre intérieur (12) et/ou le cadre extérieur (13) soient formés de préférence de profilés creux en forme de U, qui, la porte de compartiment d'emmagasinage (1) étant fermée, sont disposés à peu près dans un plan.

3. Porte de compartiment d'emmagasinage d'après la revendication 1 ou 2,
caractérisée en ce que
l'articulation entre le cadre intérieur (12) et le cadre extérieur (13) soit formée par deux boulons articulés (14) passant à travers les bras latéraux (16, 17, 19, 20) des cadres (12, 13).

4. Porte de compartiment d'emmagasinage d'après une ou plusieurs des revendications 1 à 3,
caractérisée en ce que
l'amortissement pneumatique (23) prévu pour l'arrêt de la porte de compartiment d'emmagasinage ouverte (1) soit articulé sur les profilés (15) et/ou les traverses (21) du cadre intérieur et/ou du cadre extérieur (12, 13).

5. Porte de compartiment d'emmagasinage d'après une ou plusieurs des revendications 1 à 4,
caractérisée en ce que,
à la fermeture de la porte de compartiment d'emmagasinage (1), le cadre intérieur (12) se laisse bloquer au moyen de l'arrêt élastique (23) prévu sur la face opposée aux charnières (23).

6. Porte de compartiment d'emmagasinage d'après une ou plusieurs des revendications 1 à 5,
caractérisée en ce que
la porte de compartiment d'emmagasinage (1) se déplace dans certaines limites sur le cadre extérieur (13) et qu'elle se laisse bloquer au moins aux deux extrémités sur celui-ci au moyen d'un arrêt élastique (25).

7. Porte de compartiment d'emmagasinage d'après une ou plusieurs des revendications 1 à 6,
caractérisée en ce que
pour le retient du cadre intérieur (12), il soit prévu un cadre-support (31) formé par des profilés creux courbés, sur lequel s'appuie le cadre intérieur (12) au moyen de charnières (4) et qui se laisse lier au véhicule.
